# EUROPÄISCHE PATENTSCHRIFT

(11) **EP 1 408 243 B1**
(45) Veröffentlichungstag und Bekanntmachung des Hinweises auf die Patenterteilung: **24.05.2006**
(21) Anmeldenummer: 03015642.6
(22) Anmeldetag: 17.07.2003
(51) Int. Cl.: F16B 9/02, F16B 37/14, F16B 7/18, F16B 37/02

(54) **Rohr mit einem nach innen verformten Hülsenabschnitt mit Innen-Gewinde.**
Pipe with internally formed sleeve section having inner threading
Tube déformé à une extremité en une partie tubulaire interne munie d'un filetage

(30) Priorität: 10.10.2002 DE 10247325
(43) Veröffentlichungstag der Anmeldung: 14.04.2004
(73) Patentinhaber: Cordes GmbH & Co. KG, 21698 Harsefeld (DE)
(72) Erfinder: Krüger, Udo, 21698 Harsefeld (DE)
(74) Vertreter: Philipp, Matthias

(56) Entgegenhaltungen:
- EP-A- 0 783 990
- US-A- 2 108 398
- US-A- 2 407 830
- US-A- 3 385 617

## Beschreibung

Die Erfindung betrifft eine Rohrverankerung mit einem Rohr, das ein mit Gewinde versehenes Befestigungsende aufweist, und ein Verfahren zum Herstellen eines Rohrs mit einem mit Gewinde versehenen Befestigungsende.

Es sind zahlreiche unterschiedliche Lösungen vorgeschlagen worden, um ein Rohr an einem stirnseitigen Befestigungsende an einem Befestigungspunkt zu verankern. Eine Möglichkeit besteht darin, daß an dem Befestigungsende des Rohrs eine Gewindemutter befestigt wird, beispielsweise mittels nach innen vorstehender Wulste des Rohrs, wie dies in der DE 39 17 279A1 beschrieben ist. Eine andere Lösung, die aus G 88 13 677.9 bekannt ist, sieht vor, daß in das Befestigungsende des Rohrs ein Übergangsrohr mit Innengewinde eingesetzt und in geeigneter Weise fixiert wird. Diese beiden bekannten Lösungen sind zeitaufwendig in der Fertigung und hinsichtlich der aufnehmbaren Kräfte begrenzt.

Aus der US-A-3 385 617 ist eine Rohrverankerung mit einem kappenförmigen Metallteil bekannt, das mit einem stirnseitigen Ende eines Kunststoffrohrs formschlüssig zusammenwirkt, so daß ein stabiler Anschluß des Endes des Kunststoffrohrs an einem Träger o.ä. möglich ist.

Der Erfindung liegt die Aufgabe zugrunde, eine Rohrverankerung mit einem Rohr, das ein mit Gewinde versehenes Befestigungsende aufweist, zu schaffen, die sich durch geringstmöglichen Materialeinsatz, konstruktive Einfachheit und große aufnehmbare Kräfte auszeichnet. Ferner soll ein Verfahren zum Herstellen eines Rohrs mit einem mit Gewinde versehenen Befestigungsende angegeben werden.

Diese Aufgabe wird erfindungsgemäß zunächst durch eine Rohrverankerung nach Anspruch 1 gelöst.

Durch diese überraschend einfache Lösung, bei der keinerlei zusätzlichen Teile oder zusätzliches Material benötigt werden, wird ein in höchstem Maße belastbares Befestigungsende bereitgestellt.

Bevorzugt ist vorgesehen, daß der Hülsenabschnitt im wesentlichen zylindrisch ist.

Der Innendurchmesser des Hülsenabschnitts kann zwischen 10 % und 90 % und insbesondere zwischen 20 % und 80 % des Innendurchmessers des Rohrs betragen. Bevorzugt beträgt der Innendurchmesser des Hülsenabschnitts zwischen 30 % und 70 % und insbesondere zwischen 40 % und 60 % des Innendurchmessers des Rohrs.

Zweckmäßigerweise ist vorgesehen, daß der Hülsenabschnitt einen, zwei, drei oder vier vollständige Gewindegänge aufweist.

Es kann vorgesehen sein, daß der Hülsenabschnitt fünf oder mehr vollständige Gewindegänge aufweist.

Der Hülsenabschnitt kann eine Länge aufweisen, die dem 0,1- bis 1,5-fachen des Innendurchmessers des Rohrs entspricht. Zweckmäßigerweise weist der Hülsenabschnitt eine Länge auf, die dem 0,3- bis 1,0-fachen des Innendurchmessers des Rohrs entspricht.

Das Rohr kann einen Außendurchmesser aufweisen, der gleich oder kleiner ist als der Innendurchmesser der Steckhülse.

Es kann vorgesehen sein, daß das Rohr in einem Abstand von einem Rohrende, der kleiner ist als eine axiale Steckaufnahmelänge der Steckhülse, einen Halsansatz aufweist, der sich in Einsteckrichtung konisch verjüngt und dessen maximaler Außendurchmesser gleich groß oder größer ist als der Innendurchmesser der Steckhülse.

Die Aufgabe der Erfindung wird schließlich gelöst durch ein Verfahren zum Herstellen eines Rohrs mit einem mit Gewinde versehenen Befestigungsende, welches sich dadurch auszeichnet, daß die Wandung des Rohrs im Bereich des Befestigungsendes einstülpungsartig nach innen verformt wird, wobei ein zylindrischer oder leicht konusförmiger Hülsenabschnitt gebildet wird, der mit Innengewinde versehen wird.

Hierbei kann vorgesehen sein, daß die Rohrwandung in einem ersten Schritt um etwa 90° nach innen verformt wird und in einem zweiten Schritt mit einem Dorn nach innen gedrückt wird.

Schließlich sieht die Erfindung vor, daß die Wandung des Rohrs durch fortlaufendes Umbördeln nach innen verformt wird.

Die Erfindung wird nachfolgend anhand eines Ausführungsbeispiels erläutert, wobei auf eine Zeichnung Bezug genommen wird, in der
Fig. 1 ein Rohr mit einem mit Gewinde versehenen Befestigungsende in teilweiser Schnittdarstellung zeigt, und
Fig. 2 und 3 die Herstellung einer erfindungsgemäßen Rohrverankerung erläutern.

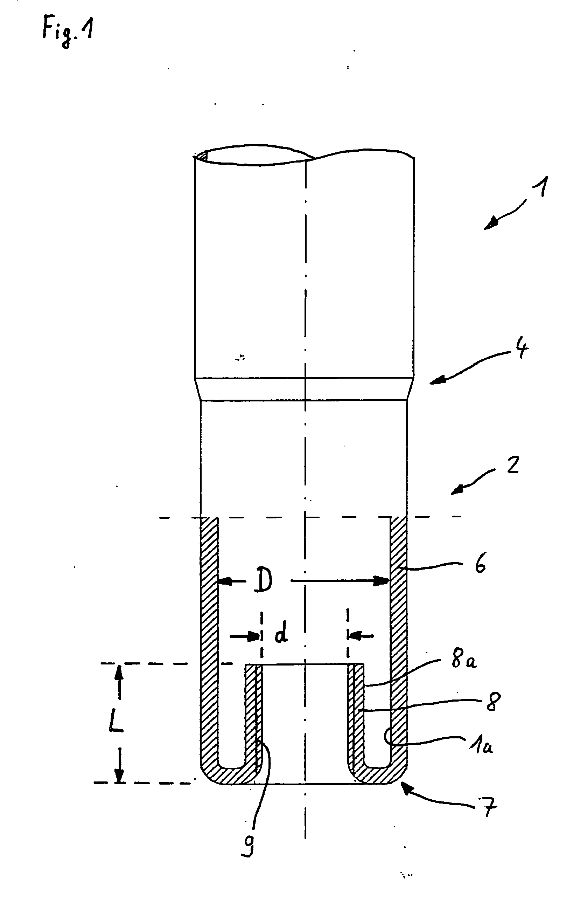

Fig. 1 zeigt einen Endabschnitt eines Rohrs 1, dessen Durchmesser sich am Übergang zu einem Befestigungsende 2 verringert, wodurch ein konusförmiger Halsansatz 4 gebildet wird, der sich in Richtung auf das Befestigungsende 2 konisch verjüngt. Der Durchmesserübergang bzw. Halsansatz 4 des Rohrs ist lediglich im Hinblick auf die nachfolgend noch zu erläuternde Rohrverankerung von Bedeutung, während das Gewinde-Befestigungsende an Rohren unabhängig von deren Durchmesser- bzw. Querschnittsverlauf in axialer Richtung ist.

Im Bereich des Befestigungsendes 2 ist die Wandung 6 des Rohrs nach Art einer Einstülpung unter 180° nach innen (zurück-)verformt, so daß ein annähernd halb torusmantelförmiger Übergangsbereich 7 und ein hohlzylindrischer Hülsenabschnitt 8 gebildet wird. Die axiale Länge L des Hülsenabschnitts 8, bezogen auf den Innendurchmesser D des Rohrs 1 (im Bereich des Befestigungsendes 2), beträgt in dem dargestellten Beispiel etwa L/D = 0,71, während der Innendurchmesser d des Hülsenabschnitts 8, bezogen auf den Innendurchmesser D des Rohrs, etwa d/D = 0,48 beträgt.

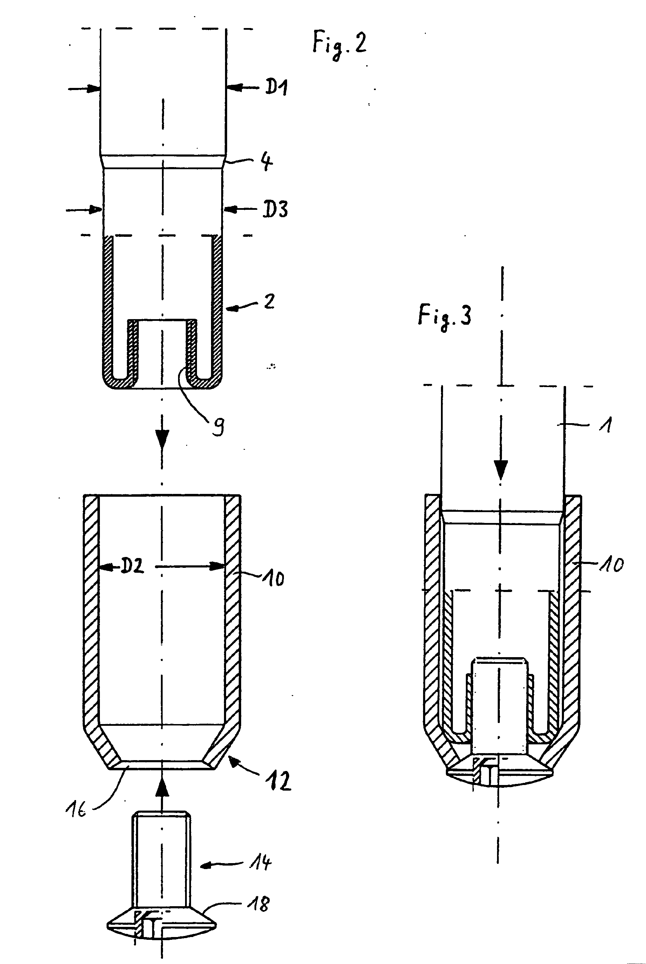

Wie in Fig. 1 angedeutet ist, ist der Hülsenabschnitt 8 mit Innengewinde 9 versehen, so daß eine Befestigungsschraube (14, Fig. 2 und 3) in axialer Richtung eingeschraubt werden kann.

Bei dieser Lösung ist es ersichtlich nicht von erheblicher Bedeutung, ob der Hülsenabschnitt 8 tatsächlich hohlzylindrisch ist, wie in Fig. 1 dargestellt ist, oder mehr oder weniger konisch bzw. kegelmantelförmig ausfällt, da es im wesentlichen nur darauf ankommt, einige Gewindegänge des Innengewindes 9 in dem Hülsenabschnitt anbringen zu können. Für die Praxis sind in der Regel häufig bereits fünf, vier oder auch nur drei Gewindegänge ausreichend, wobei in manchen Fällen auch bereits ein oder zwei vollständige Gewindegänge genügen können.

Der Durchmesser des Hülsenabschnitts 8 im Verhältnis zum Durchmesser des Rohrs 1 wird aus praktischen Gründen in der Regel so gewählt, daß das Innengewinde 9 eine Befestigungsschraube aufnehmen kann, mit der die zu erwartenden Belastungen sicher aufgenommen werden können. Dabei ist durchaus auch der Fall denkbar, daß die Außenfläche 8a des Hülsenabschnitts praktisch unmittelbar an der Innenfläche 1a des Rohrs anliegt, d.h. ein Hülsenabschnitt mit maximal möglichem Durchmesser.

Das Rohr 1 könnte auch andere als kreisrunde Querschnittsform haben, solange die Möglichkeit der Herstellung einer hülsenartigen Einstülpung besteht, die mit Innengewinde versehen werden kann.

Ein erfindungsgemäßes Verfahren zum Herstellen des Rohrs sieht vor, daß mit geeigneten Preßwerkzeugen in einem ersten Schritt die Wandung des Rohr um 90° nach innen verformt wird, d.h. im wesentlichen radial und anschließend in einem zweiten Schritt mit einem geeigneten Dorn nochmals um 90° nach innen gedrückt wird, im wesentlichen parallel zur Längsachse des Rohrs. Alternativ kann mit einem Umbördelungswerkzeug, vorzugsweise unter Erwärmung des entsprechenden Materialbereichs, eine fortschreitende Umbördelung bzw. einstülpungsartige Verformung des Rohrendes erreicht werden.

Nachfolgend sei auf Fig. 2 und 3 Bezug genommen, die eine erfindungsgemäße Rohrverankerung beispielhaft erläutern. Zur Verankerung des Rohrs 1 steht eine Steckhülse 10 zur Verfügung, die beispielsweise ortsfest an einem Maschinen- oder Fahrzeugteil angebracht sein kann. Das Rohr wird mit dem Befestigungsende voran in die Steckhülse 10 eingeschoben, wobei der Außendurchmesser D3 des Rohrs im Bereich des Befestigungsendes kleiner gewählt ist als der Innendurchmesser D2 der Steckhülse, während der Außendurchmesser D1 des Rohrs in seinem übrigen Bereich mit dem Innendurchmesser D2 der Steckhülse übereinstimmt oder etwas größer ist als dieser. Der Durchmesserübergang des Rohrs von D3 auf D1, auch als Halsansatz 4 bezeichnet, sorgt für eine spielfreie Aufnahme im oberen Bereich der Steckhülse, während die Anlage des Befestigungsendes 2 des Rohrs gegen eine konusartige Verjüngung 12 der Steckhülse 10 für eine spielfreie Aufnahme im unteren Bereich der Steckhülse sorgt.

Eine Befestigungsschraube 14 wird durch eine Durchstecköffnung 16 der Steckhülse 10 in das Innengewinde 9 des Hülsenabschnitts 8 eingeschraubt und das Rohr durch Anziehen der Befestigungsschraube fest in der Steckhülse verankert, wobei eine konusförmige Kopfanlagefläche 18 der Befestigungsschraube 14 eine zusätzliche Zentrierungswirkung mit sich bringt.

### Bezugszeichenliste

- 1: Rohr
- 1a: Innenfläche
- 2: Befestigungsende
- 4: Halsansatz
- 6: Wandung
- 7: Übergangsbereich
- 8: Hülsenabschnitt
- 8a: Außenfläche
- 9: Innengewinde
- 10: Steckhülse
- 12: konusartige Einschnürung
- 14: Befestigungsschraube
- 16: Durchstecköffnung
- 18: Kopfanlagefläche

- d: Innendurchmesser des Hülsenabschnitts
- D: Innendurchmesser des Rohr-Befestigungsendes
- D1: Außendurchmesser des Rohrs
- D2: Innendurchmesser der Steckhülse
- D3: reduzierter Außendurchmesser am Rohrende

## Patentansprüche

1. Rohrverankerung (1, 10) mit einem Rohr (1), das ein mit Gewinde versehenes Befestigungsende (2) aufweist, wobei die Wandung (6) des Rohrs (1) im Bereich des Befestigungsendes (2) unter Bildung eines einstülpungsartigen zylindrischen oder leicht konusförmigen Hülsenabschnitts (8) nach innen verformt und der Hülsenabschnitt (8) mit Innengewinde (9) versehen ist und die Rohrwandung (6) in einem dem Hülsenabschnitt (8) radial gegenüberliegenden Bereich einen unveränderten vollen Hohlzylinderquerschnitt aufweist, und mit einer das Befestigungsende (2) des Rohrs (1) aufnehmenden zylindrischen Steckhülse (10), die in einem Fußbereich eine Durchstecköffnung für eine Befestigungsschraube (14) aufweist.

2. Rohrverankerung nach Anspruch 1, **dadurch gekennzeichnet, daß** der Hülsenabschnitt (8) im wesentlichen zylindrisch ist.

3. Rohrverankerung nach Anspruch 1 oder 2, **dadurch gekennzeichnet, daß** der Innendurchmesser (d) des Hülsenabschnitts (8) zwischen 10 % und 90 % und insbesondere zwischen 20 % und 80 % des Innendurchmessers (D) des Rohrs (1) beträgt.

4. Rohrverankerung nach Anspruch 1 oder 2, **dadurch gekennzeichnet, daß** der Innendurchmesser (d) des Hülsenabschnitts (8) zwischen 30 % und 70 % und insbesondere zwischen 40 % und 60 % des Innendurchmessers (D) des Rohrs (1) beträgt.

5. Rohrverankerung nach einem vorangehenden Ansprüche, **dadurch gekennzeichnet, daß** der Hülsenabschnitt (8) einen, zwei, drei oder vier vollständige Gewindegänge aufweist.

6. Rohrverankerung nach einem der Ansprüche 1 bis 4, **dadurch gekennzeichnet, daß** der Hülsenabschnitt (8) fünf oder mehr vollständige Gewindegänge aufweist.

7. Rohrverankerung nach einem der vorangehenden Ansprüche, **dadurch gekennzeichnet, daß** der Hülsenabschnitt (8) eine Länge (L) aufweist, die dem 0,1- bis 1,5-fachen und insbesondere dem 0,3- bis 1,0-fachen des Innendurchmessers (D) des Rohrs entspricht.

8. Rohrverankerung nach einem der vorangehenden Ansprüche, **dadurch gekennzeichnet, daß** das Rohr einen Außendurchmesser (D1) aufweist, der gleich oder kleiner ist als der Innendurchmesser (D2) der Steckhülse (10).

9. Rohrverankerung nach einem der vorangehenden Ansprüche, **dadurch gekennzeichnet, daß** das Rohr in einem Abstand von einem Rohrende, der kleiner ist als eine axiale Steckaufnahmelänge der Steckhülse (10), einen Halsansatz (11) aufweist, der sich in Einsteckrichtung konisch verjüngt und dessen maximaler Außendurchmesser (D1) gleich oder größer ist als der Innendurchmesser (D2) der Steckhülse (10).

10. Verfahren zum Herstellen eines Rohrs mit einem mit Gewinde versehenen Befestigungsende, **dadurch gekennzeichnet, daß** die Wandung (6) des Rohrs (1) im Bereich des Befestigungsendes (2) einstülpungsartig nach innen verformt wird, wobei ein zylindrischer oder leicht konusförmiger Hülsenabschnitt (8) gebildet wird, der mit Innengewinde (9) versehen wird.

11. Verfahren nach Anspruch 10, **dadurch gekennzeichnet, daß** die Rohrwandung in einem ersten Schritt um etwa 90° nach innen verformt wird und in einem zweiten Schritt mit einem Dorn nach innen gedrückt wird.

12. Verfahren nach Anspruch 10, **dadurch gekennzeichnet, daß** die Wandung (6) des Rohrs (1) durch fortlaufendes Umbördeln nach innen verformt wird.

## Claims

1. Pipe anchoring (1, 10) with a pipe (1) which has a fastening end (2) provided with a thread, the wall (6) of the pipe (1) being deformed inwards in the region of the fastening end (2) forming a turn-in-like cylindrical or slightly conical sleeve portion (8), and the sleeve portion (8) being provided with an internal thread (9), and the pipe wall (6) having an unchanged full hollow-cylinder cross section in a region lying radially opposite the sleeve portion (8), and with a cylindrical insertion sleeve (10) which receives the fastening end (2) of the pipe (1) and has in a foot region a pass-through opening for a fastening screw (14).

2. Pipe anchoring according to Claim 1, **characterized in that** the sleeve portion (8) is essentially cylindrical.

3. Pipe anchoring according to Claim 1 or 2, **characterized in that** the inside diameter (d) of the sleeve portion (8) is between 10% and 90% and in particular between 20% and 80% of the inside diameter (D) of the pipe (1).

4. Pipe anchoring according to Claim 1 or 2, **characterized in that** the inside diameter (d) of the sleeve portion (8) is between 30% and 70% and in particular between 40% and 60% of the inside diameter (D) of the pipe (1).

5. Pipe anchoring according to one of the preceding claims, **characterized in that** the sleeve portion (8) has one, two, three or four complete thread turns.

6. Pipe anchoring according to one of Claims 1 to 4, **characterized in that** the sleeve portion (8) has five or more complete thread turns.

7. Pipe anchoring according to one of the preceding claims, **characterized in that** the sleeve portion (8) has a length (L) which corresponds to 0.1 to 1.5 times and in particular 0.3 to 1.0 times the inside diameter (D) of the pipe.

8. Pipe anchoring according to one of the preceding claims, **characterized in that** the pipe has an outside diameter (D1) which is the same as or smaller than the inside diameter (D2) of the insertion sleeve (10).

9. Pipe anchoring according to one of the preceding claims, **characterized in that** the pipe has at a distance from a pipe end which is smaller than an axial insertion receiving length of the insertion sleeve (10) a shoulder (4) which tapers conically in the insertion direction and the maximum outside diameter (D1) of which is the same as or larger than the inside diameter (D2) of the insertion sleeve (10).

10. Method of producing a pipe with a fastening end provided with a thread, **characterized in that** the wall (6) of the pipe (1) is deformed inwards like a turn-in in the region of the fastening end (2), a cylindrical or slightly conical sleeve portion (8) being formed, which is provided with an internal thread (9).

11. Method according to Claim 10, **characterized in that** the pipe wall is deformed inwards by approximately 90° in a first step and is pushed inwards with a mandrel in a second step.

12. Method according to Claim 10, **characterized in that** the wall (6) of the pipe (1) is deformed inwards by continuous bordering.

## Revendications

1. Ancrage tubulaire (1,10) avec un tube (1), présentant une extrémité de fixation (2) munie d'un filetage, la paroi (6) du tube (1), dans la zone de l'extrémité de fixation (2), étant déformée vers l'intérieur en formant un tronçon de douille (6) cylindrique ou légèrement conique, du genre d'un évasement intérieur, et le tronçon de douille (8) étant muni d'un filetage intérieur (9), et la paroi tubulaire (6) présentant, dans une zone, radialement opposée au tronçon de douille (8), une section transversale de cylindre creux pleine inchangée, et avec une douille d'enfichage (10) cylindrique, recevant l'extrémité de fixation (2) du tube (1) et présentant, dans une zone de pied, une ouverture de passage pour une vis de fixation (14).

2. Ancrage tubulaire selon la revendication 1, **caractérisé en ce que** le tronçon de douille (8) est sensiblement cylindrique.

3. Ancrage tubulaire selon la revendication 1 ou 2, **caractérisé en ce que** le diamètre intérieur (d) du tronçon de douille (8) fait entre 10 % et 90 % et, en particulier, entre 20 % et 80 % du diamètre intérieur (D) du tube (1).

4. Ancrage tubulaire selon la revendication 1 ou 2, **caractérisé en ce que** le diamètre intérieur (d) du tronçon de douille (8) fait entre 30 % et 70 % et, en particulier, entre 40 % et 60 % du diamètre intérieur (D) du tube (1).

5. Ancrage tubulaire selon l'une des revendications précédentes, **caractérisé en ce que** le tronçon de douille (8) présente un, deux, trois ou quatre pas de vis complets.

6. Ancrage tubulaire selon l'une des revendications 1 à 4, **caractérisé en ce que** le tronçon de douille (8) présente cinq pas de vis complets, ou plus.

7. Ancrage tubulaire selon l'une des revendications précédentes, **caractérisé en ce que** le tronçon de douille (8) présente une longueur (L) correspondant à 0,1 à 1,5 fois et, en particulier, à 0,3 à 1,0 fois le diamètre intérieur (D) du tube.

8. Ancrage tubulaire selon l'une des revendications précédentes, **caractérisé en ce que** le tube présente un diamètre extérieur (D1) égal ou inférieur au diamètre intérieur (D2) de la douille à enfichage (10).

9. Ancrage tubulaire selon l'une des revendications précédentes, **caractérisé en ce que** le tube présente, à une certaine distance d'une extrémité de tube, inférieure à une longueur de logement d'enfichage axial de la douille à enfichage (10), un appendice en col (11), allant en s'effilant de façon conique en évoluant dans la direction d'enfichage et dont le diamètre extérieur (D1) maximal est égal ou supérieur au diamètre intérieur (D2) de la douille à enfichage (10).

10. Procédé de fabrication d'un tube ayant une extrémité de fixation munie d'un filetage, **caractérisé en ce que** la paroi (6) du tube (1), dans la zone de l'extrémité de fixation (2), est déformée vers l'intérieur à la façon d'un évasement intérieur, un tronçon de douille (8), cylindrique ou légèrement conique, étant formé, muni d'un filetage intérieur (9).

11. Procédé selon la revendication 10, **caractérisé en ce que** la paroi tubulaire est déformée vers l'intérieur, d'environ 90°, lors d'une première étape, et est refoulé vers l'intérieur avec un mandrin, lors d'une deuxième étape.

12. Procédé selon la revendication 10, **caractérisé en ce que** la paroi (6) du tube (1) est déformée vers l'intérieur, par rabattement continu.
